# EUROPEAN PATENT APPLICATION

(11) **EP 1 739 915 A1**
(43) Date of publication of application: **03.01.2007**
(21) Application number: 05014192.8
(22) Date of filing: 30.06.2005
(51) Int. Cl.: H04L 29/06

(54) **Network arrangement and method for handling sessions in a telecommunications network**

(71) Applicant: SIEMENS AKTIENGESELLSCHAFT, 80333 München (DE)
(72) Inventor: Papadimitriou, Dimitris, Dr., 11254 Athen (GR)

(57) **Abstract**

The present invention relates to a novel network arrangement and method for handling sessions or calls in a communications network. More particularly, the invention provides a novel network arrangement and method for avoiding "ghost calls" in IP based communications networks for achieving higher session completion rates. An inventive network arrangement comprises at least the following: a session border controller for monitoring and/or controlling available resources for sessions involving a user terminal and for determining a busy condition if a new session's resource requirements are in excess of the available resources; and an application server for intercepting a busy notification generated towards the new session's origination in response to a busy condition, the application server further configured to either generate a notification towards the new session's destination or redirect the new session to a different destination. Signaling may be accomplished by means of the session Initiation Protocol SIP.

## Description

Network arrangement and method for handling sessions in a telecommunications network

The present invention relates to a novel network arrangement and method for handling sessions or calls in a communications network. More particularly, the invention provides a novel network arrangement and method for achieving higher session completion rates in IP based communications networks by avoiding "ghost calls".

Modern telecommunication networks often employ voice over Internet Protocol (VoIP) techniques to convey telephone calls between users. A widely used VoIP technique is known as the Session Initiation Protocol (SIP) and defined by IETF RFC 3261. SIP is an application-layer control (signaling) protocol for creating, modifying, and terminating sessions with one or more participants. These sessions include Internet telephone calls, multimedia distribution, and multimedia conferences.

A problem occurs when using SIP if a first user initiates a call, or "session", the SIP signaling completes successfully and a called second user's terminal equipment starts ringing, but there is not enough bandwidth available for carrying out a voice transaction, for example, if all available bandwidth at the called user's network access is occupied by some other application such as another voice or data transaction. In such cases, if the called user responds to this call, the call, or session, is established but insufficient bandwidth will prevent the users from talking to each other. Such "ghost calls" are clearly undesirable for both users and network operators. For example, since the signaling completed successfully, the calling first user would be charged for a call that was in fact not successful.

IETF RFC 3312 entitled "Integration of Resource Management and SIP" addresses this problem. RFC 3312 describes how network quality of service can be introduced as a precondition for establishment of sessions initiated by the Session Initiation Protocol (SIP). According to RFC 3312, session establishment does not take place, i.e. the called user is not alerted, until certain preconditions, based on network resources availability, for the media stream are met. Initial failure to meet these preconditions may lead to a re-negotiation such as selection of a lower bandwidth codec by the endpoints. At the called endpoint, either the desired resources are reserved or the session establishment will fail. Using the teachings of RFC 3312, "ghost calls" can be avoided.

However, with the methods disclosed in RFC 3312, neither called nor calling user have any control over the completion of the call. When encountering a busy condition, the only option available to the calling user is to reattempt the call at a later time.

It is therefore an object of the present invention to provide a novel network arrangement allowing for further options for either or both the called and calling user. It is another object of the invention to provide a novel method for handling sessions in a telecommunications network.

In accordance with the foregoing objects, there is provided by the invention a network arrangement comprising at least the following:
- a session border controller for monitoring and/or controlling available resources for sessions involving a user terminal and for determining a busy condition if a new session's resource requirements are in excess of the available resources; and
- an application server for intercepting a busy notification generated towards the new session's origination in response to a busy condition, the application server further configured to either generate a notification towards the new session's destination or redirect the new session to a different destination.

The invention further provides a method for handling sessions in a telecommunications network, comprising:
- in a session border controller, monitoring and/or controlling available resources for sessions involving a user terminal and determining a busy condition if a new session's resource requirements are in excess of the available resources; and
- in an application server, intercepting a busy notification generated towards the new session's origination in response to a busy condition and generating a notification towards the new session's destination or redirecting the new session to a different destination.

One advantage of the present invention is that it allows for services that enable the called user to exercise control over calls received at a time when not enough resources are available to successfully complete the call.

A preferred signaling protocol for use with the present invention is the Session Initiation Protocol SIP.

Resource control and/or monitoring may be accomplished by monitoring and/or controlling at least one of the following parameters: available bandwidth; number of available media streams; any other parameter relating to a user terminal and representing a resource subject to a physical or other limitation.

In the following, preferred embodiments of the invention will be described with reference to a figure.

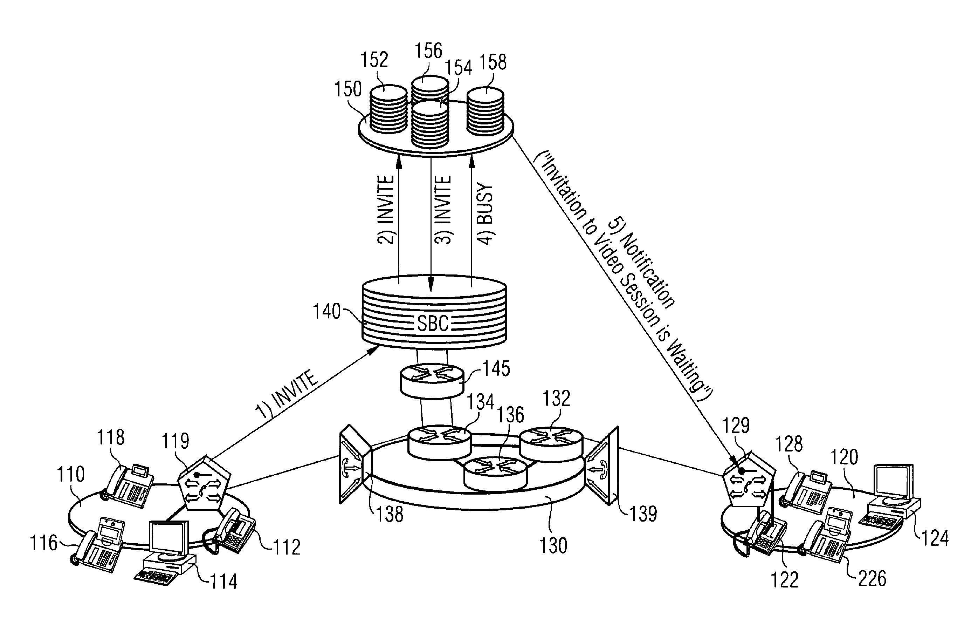

In the figure, there is shown an exemplary network arrangement 100 comprising user terminal equipment 110, 120 connected to a packet backbone network 130, a Session Border Controller or SBC 140, and an application server farm 150.

User terminal equipment 110, 120 may comprise either one or a combination of the following: analog telephony equipment 112, 122; personal computers 114, 124; video telephony equipment 116, 126; ISDN or other digital telephony equipment 118, 128; and SIP gateways 119, 129. In alternative configurations, SIP phones and/or SIP clients are used instead of SIP gateways 119, 129 and legacy equipment - not shown.

The packet backbone network 130 may comprise routing equipment such as routers 132, 134, 136. For connecting the user terminal equipment 110, 120 to the packet backbone network 130 a variety of so-called access technologies may be employed such as T1/E1 lines, DSL techniques, Ethernet techniques such as Metropolitan Ethernet, or wireless techniques such as Wireless Local Loop (WLL). The illustrative embodiment comprises optional multiplexer/concentrators 138, 139 for connecting to user terminal equipment 110, 120, respectively.

Depending on a chosen access technology, various access protocols may be employed as is well known in the art. The protocol hierarchy will, however, in many cases comprise the Internet Protocol (IP) as a network layer packet protocol. IP may be used throughout the packet backbone network 130 and for connecting user terminal equipment 110, 120. For residential access, the Peer-to-Peer Protocol (PPP), the Peer-to-Peer Protocol over Ethernet (PPPoE), or the Peer-to-Peer Tunneling Protocol (PPTP) are often used for connecting user terminal equipment 110, 120 to the packet backbone network 130. These protocols, in turn, allow the exchange of IP packets.

SBC 140 may be coupled to packet backbone network 130 directly or by means of an edge router 145. SBC 140 is also communicatively coupled to application servers 152-158 of application server farm 150. Of course, a single application server 152 may alternatively be chosen if suitable to perform all required application server functions - not shown.

SIP Call Control, or signaling, is symbolized throughout the figure by dashed lines.

In accordance with the invention, SBC 140 is used for resource availability inspection before a session is offered to the session's destination. In the example shown in the figure, it is assumed that a session originates from a first user's terminal equipment 110 (also denoted calling party or origination) - step 1. It is further assumed that the session's destination is a second user's terminal equipment 120 (also denoted called party).

One of the functions of SBC platforms such as SBC 140 is resource management. VoIP traffic, due to its requirement for continuous low-latency high-packet rate flows, is sensitive to any bandwidth restrictions. Therefore, SBC platforms are typically employed for providing bandwidth consumption based policies that enable the limiting of bandwidth consumption per end user or enterprise customer. Other resources may also be monitored and/or controlled based on other subscription or policy information such as allowable number of simultaneous sessions.

For example, a bandwidth policy may be applied by examining in real-time the bandwidth used by both outgoing and incoming active media streams, inspecting new sessions for their required bandwidth usage or codec profile, and dropping new sessions that could cause the total bandwidth consumption to exceed a pre-defined upper bound. Such pre-defined upper bound may also be a physical bandwidth limitation of the chosen (access) transmission technology.

Instead of the parameter "bandwidth", other parameters may be monitored and/or controlled such that the number of active media streams does not exceed a pre-defined limit.

Restrictions may be physical in nature or may result from business models or Service Level Agreements (SLA). If any such restriction leads to a new session being dropped because the new session's resource requirements exceed the available resources, this condition is termed "busy condition". Upon encountering a busy condition, the SBC 140 creates a corresponding busy notification for informing the calling party 110 of the busy condition.

In accordance with the invention, SBC 140 checks for busy conditions before offering the SIP INVITE message to destination 120, while in prior art implementations and without using the invention, the INVITE message would immediately be sent to the destination. Triggered by the SDP response as contained in the 183 "Session Progress" message, the resource authorization would then take place.

If a busy condition is encountered then the SBC will return a 486 "Busy Here" message, which will be intercepted by or redirected to a corresponding terminating Application Server (AS) 152-158 controlling either one or both of the services "Session Redirection" or "Session Waiting", if the called party has subscribed to any of these services - steps 2, 3, 4.

In case Session Waiting has been subscribed by the called user, the corresponding terminating Application Server would notify the called party that a session is waiting - step 5. Such notification could be presented visually or aurally to the called party. Then, the called party 120 would be aware of the fact that he/she is invited to a session that cannot be successfully established, and could react correspondingly. For example, the called party could free some bandwidth, e.g. by canceling a less important session or by using the Call Hold service. Those with skills in the art will without the use of inventive faculty be able to implement enhanced SIP clients or SIP terminals configured to offer corresponding procedures to the user.

In case Session Redirection has been subscribed by the called user, the session will be redirected to a different destination. The called user may specify a suitable destination.

If the called subscriber has subscribed to either or both services "Session Waiting" or "Session Redirection" but deactivated it, temporarily or permanently, a busy notification, for example notification 486 "Busy Here" will be forwarded to origination of the session. The calling user may then request for example the session to be completed upon the called party becoming available again by invoking a "Session Completion on Busy" type of service. This would allow the originating user to complete the session as soon as the busy condition has ceased. A presence service may be utilized for monitoring the busy conditions at the destination endpoint on behalf of the originating party.

## Claims

1. A network arrangement (100) comprising at least the following:
- a session border controller (140) for monitoring and/or controlling available resources for sessions involving a user terminal (110, 120) and for determining a busy condition if a new session's resource requirements are in excess of the available resources; and
- an application server (152) for intercepting a busy notification generated towards the new session's origination (110) in response to a busy condition, the application server further configured to either generate a notification towards the new session's destination (120) or redirect the new session to a different destination.

2. The network arrangement according to claim 1 wherein signaling is accomplished by means of the Session Initiation Protocol SIP.

3. The network arrangement according to any of claims 1 or 2 wherein the session border controller (140) monitors and/or controls available resources by monitoring and/or controlling at least one of the following parameters: available bandwidth; number of available media streams; any other parameter relating to a user terminal and representing a resource subject to a physical or other limitation.

4. A method for handling sessions in a telecommunications network (100), comprising:
- in a session border controller (140), monitoring and/or controlling available resources for sessions involving a user terminal (110, 120) and determining a busy condition if a new session's resource requirements are in excess of the available resources; and
- in an application server, intercepting a busy notification generated towards the new session's origination (110) in response to a busy condition and generating a notification towards the new session's destination (120) or redirecting the new session to a different destination.

5. The method according to claim 4, **characterized in that** signaling is accomplished by means of the Session Initiation Protocol SIP in the telecommunications network.

6. The method according to any of claims 4 or 5 wherein the step of monitoring and/or controlling available resources includes monitoring and/or controlling at least one of the following parameters: available bandwidth; number of available media streams; any other parameter relating to a user terminal and representing a resource subject to a physical or other limitation.
